Europäisches Patentamt

European Patent Office

Office européen des brevets

(19)

(11) **EP 0 780 273 A1**

(12) ## DEMANDE DE BREVET EUROPEEN

(43) Date de publication:
**25.06.1997 Bulletin 1997/26**

(51) Int. Cl.⁶: **B60R 25/10**

(21) Numéro de dépôt: **95402938.5**

(22) Date de dépôt: **22.12.1995**

(84) Etats contractants désignés:
**AT BE CH DE DK ES FR GB GR IE IT LI LU MC NL PT SE**

(71) Demandeur: **Daouadi, Jamel**
**78310 Maurepas (FR)**

(72) Inventeur: **Daouadi, Jamel**
**78310 Maurepas (FR)**

(74) Mandataire: **Pernez, Helga**
**Breese - Majerowicz,**
**CNIT - WTC 2 - P.B. 434**
**92053 Paris la Défense (FR)**

(54) **Procédé et dispositifs pour la localisation de véhicules, notamment de véhicules volés, le suivi de véhicules pour la sécurité du territoire ou la logistique de flottes de véhicules**

(57)     La présente invention concerne un procédé et un dispositif pour la localisation de véhicules, notamment de véhicules volés, le suivi de véhicules pour la sécurité du territoire ou la logistique de flottes de véhicules, du type consistant à équiper le véhicule avec un ensemble micro-émetteur-récepteur embarqué, le micro-émetteur (5) étant activable par un récepteur (8) détectant l'émission d'un signal radioélectrique spécifique, caractérisé en ce que le signal radioélectrique est émis par l'intermédiaire d'un réseau cellulaire de radiotéléphonie tel que le GSM, et en ce que le micro-émetteur (5) émette après activation sur ledit réseau cellulaire un signal comportant une séquence d'identification du véhicule et une séquence propre à identifier le maillon proximal du réseau cellulaire.

## Description

La présente invention concerne un procédé et un dispositif pour la localisation de véhicules, notamment de véhicules volés, le suivi de véhicules pour la sécurité du territoire ou la logistique de flottes de véhicules.

On connaît dans l'état de la technique des procédés permettant de localiser des véhicules, par la mise en oeuvre d'un micro-émetteur embarqué formant "mouchard". Cet micro-émetteur est disposé discrètement en un point difficilement repérable du véhicule.

A titre d'exemple, le brevet FR2620096 divulgue un dispositif de recherche et de poursuite des véhicules volés. Le dispositif selon l'art antérieur comporte des micro-émetteurs-récepteurs radio multifréquences, l'un équipant les véhicules particuliers ERES, l'autre équipant les véhicules de patrouille ERM. Ces micro-émetteurs-récepteurs fonctionnant sur la base d'un dialogue informatisé, l'ensemble micro-émetteur-récepteur ERES équipant les véhicules particuliers étant alimenté par sa propre batterie interne BA. Celle-ci est rechargée en permanence par la batterie du véhicule B1. Cet ensemble de l'art antérieur est jumelable à pratiquement tous les systèmes de détection d'effraction et d'alarme pour véhicules existants. Le micro-émetteur-récepteur est doté d'une antenne omnidirectionnelle A1 dissimulée, et d'un clavier à code CC permettant la mise hors service du micro-émetteur, tandis que l'ensemble micro-émetteur-récepteur équipant les véhicules est doté de 4 antennes directionnelles A2 permettant la localisation géographique du signal émis sur un angle de 360 degrés.

Ce système met en oeuvre des véhicules de patrouilles comportant chacun un micro-émetteur pouvant effectuer une interrogation générale. Pour éviter le chevauchement de messages émanant de véhicules différents, le système prévoie des temps de retard aléatoires et un choix arbitraire de fréquence d'émission. Ce système ne permet de localiser un véhicule que dans un rayon limité, et nécessite une préconnaissance de la zone dans laquelle peut se trouver le véhicule.

Un autre brevet de l'art antérieur, le brevet FR2529152 décrit un système d'antivol et de récupération pour véhicules. Le système d'antivol et de récupération pour véhicules selon ce brevet antérieur comprend un micro-émetteur radio installé sur le véhicule et qui est connecté par des circuits à la batterie de celui-ci de sorte qu'en cas d'utilisation frauduleuse du véhicule, le micro-émetteur émet un signal. Un ou plusieurs récepteurs radio de surveillance sont installés à une certaine distance du véhicule et reçoivent automatiquement le signal ainsi émis.

Ce mode de localisation implique que le véhicule passe à proximité d'une station de contrôle. L'efficacité du système de localisation est donc limitée par la densité de l'implantation des stations de contrôle.

D'autres procédés exploités commercialement consistent à équiper un certain nombre de points de passage obligé tels que des barrières de péage autoroutières, des frontières ou l'entrée d'agglomération avec des récepteurs détectant l'émission en continu d'un signal provenant d'un véhicule. Les procédés mis en oeuvre par ces systèmes ne sont pas totalement satisfaisant.

En effet, leur efficacité dépend du taux de couverture des zones surveillées. Pour être efficace, il est nécessaire que la localisation soit possible sur un territoire géographique étendu et sans trou. Pour pouvoir investir dans une couverture aussi dense, il est nécessaire qu'un grand nombre d'utilisateurs s'intéresse au système. Ce dilemme rend la mise en oeuvre effective des systèmes de l'art antérieur quasiment impossible.

Un autre brevet de l'art antérieur, le brevet FR2651894 décrit un système comprenant, dans chaque mobile, un répondeur dont le récepteur est un récepteur d'appel de personnes avec code(s) individuel(s) d'identification et dont le micro-émetteur est capable d'émettre le code d'identification du répondeur, un réseau radioélectrique d'appels de personnes, et un ensemble de radiogoniomètres capable de localiser, par triangulation, le mobile dont le micro-émetteur du répondeur émet un code d'identification en réponse au code d'appel lancé par le réseau radioélectrique. L'ensemble de radiogoniomètres est relié au réseau radioélectrique par des moyens de transmission pour être mis en alerte à chaque code d'appel lance par le réseau. Le réseau radioélectrique, après l'envoi d'un premier code d'appel, ne lancera un nouveau code d'appel vers un autre mobile qu'après un intervalle de temps prédéterminé. En variante, la sortie de l'organe de commande du répondeur n'est validée, à la réception d'un code d'appel, qu'après un retard prédéterminé, et, pendant ledit retard prédéterminé, le réseau radioélectrique peut lancer séquentiellement de nouveaux appels.

Ce système met en oeuvre des moyens de radiogoniométries complexes, nécessitant en particulier des antennes particulières propres à délivrer des informations directionnelles. La forme et la dimension de telles antennes les rend incompatibles avec la recherche de discrétion de l'installation embarquée.

On connaît également dans l'état de la technique le brevet britannique GB2218835 divulgant un système s'apparentant à une alarme télécommandée. Ce système comporte des capteurs d'intrusion. En cas de vol du véhicule équipé de ce système, les capteurs déclenchent l'émission d'un signal radio. Ce signal radio est détecté par une station fixe. Il présente l'inconvénient d'êter facilement détectable, et donc neutralisable, par un malfaiteur équipé d'un scanner analysant le signal RF lors du déclenchment des capteurs. Un autre but de ce système est de permettre l'immobilisation à distance du véhicule volé. Cette solution n'est pas non plus satisfaisante, car outre le danger résultant d'une immobilisation à distance d'un véhicule sur la voie publique, peut être sur une voie de circulation, cette immobilisation alerte immédiatement le malfaiteur.

Le modèle d'utilité allemand DE9216097 divulgue un système antivol comportant un émetteur solidaire d'un véhicule et pouvant émettre un signal codé. L'émetteur fonctionne en permanence. En cas de constatation du vol du véhicule, le propriétaire est censé prévenir un opérateur central qui procédera à la localisation de l'émetteur. Là encore, il est aisé pour un malfaiteur de localiser l'emplacement de l'émetteur sur le véhicule.

De même, le brevet européen EP417944 divulgue une méthode de déclenchement d'une alarme à distance, par l'intermédiaire du réseau cellulaire téléphonique.

Afin de remédier aux inconvénients des dispositifs de l'art antérieur, et de proposer un système composé d'un ensemble embarqué facilement miniaturisable et dissimulable, et de moyens fixes de faible coût de mise en oeuvre, l'invention concerne un procédé pour la localisation de véhicules, notamment de véhicules volés, du type consistant à équiper le véhicule avec un ensemble micro-émetteur-récepteur embarqué, le micro-émetteur étant activable par un récepteur détectant l'émission d'un signal radioélectrique spécifique, caractérisé en ce que le signal radioélectrique est émis par l'intermédiaire d'un réseau cellulaire de radiotéléphonie tel que le GSM, et en ce que le micro-émetteur émette après activation sur ledit réseau cellulaire un signal comportant une séquence d'identification du véhicule et une séquence propre à identifier le maillon proximal du réseau cellulaire.

Un tel procédé permet d'utiliser d'une part les réseaux de téléphonie cellulaire existant pour activer l'ensemble embarqué, et d'autre part de réduire et le coût et améliorer la possibilité de camouflage du matériel équipant le véhicule.

Avantageusement, la détection du signal d'activation déclenche la mémorisation en permanence d'un couple de valeurs constitué par l'information propre à identifier le maillon proximal du réseau cellulaire et par l'heure de mémorisation.

L'invention concerne également un dispositif embarqué pour la localisation de véhicules, notamment de véhicules volés, du type comportant un ensemble micro-émetteur-récepteur embarqué, caractérisé en ce qu'il comporte en outre des moyens de mémoire pour mémoriser les informations d'identification du maillon du réseau cellulaire de radiotéléphonie, et des moyens pour provoquer l'émission d'un signal comportant une séquence propre à identifier le véhicule et une séquence correspondant au maillon cellulaire proximal en réponse à la réception d'un signal d'activation.

De préférence, le dispositif selon l'invention comporte en outre un circuit d'horloge propre à déclencher périodiquement la mémorisation d'un couple de valeurs constitué par l'heure et l'information d'identification du maillon du réseau cellulaire de radiotéléphonie.

L'invention sera mieux comprise à la lecture de la description qui suit, concernant un exemple de réalisation non limitatif, faisant référence aux dessins annexés où :

- la figure 1 représente une vue schématique du système de localisation selon l'invention ;
- la figure 2 représente le schéma de principe des moyens embarqués.
- la figure 3 représente le schéma de principe de la station fixe.

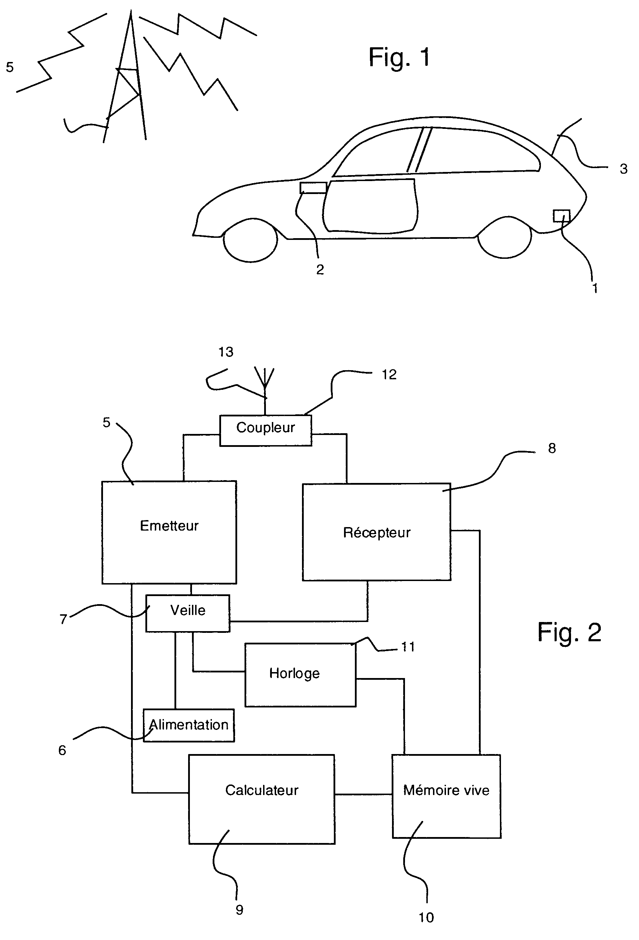

La figure 1 représente une vue schématique du système de localisation selon l'invention.

Il comprend principalement un ensemble embarqué formé par un micro-émetteur (1) relié à un module de radiotéléphonie (2) et à une antenne commune (3).

L'ensemble embarqué peut selon le mode de réalisation être constitué par un circuit intégrant l'ensemble des moyens d'émission, de réception et de traitement du signal, ou d'un circuit comportant les fonctions spécifiques à l'invention, susceptible d'être connecté à un radiotéléphone de type connu.

Le véhicule se déplace dans un territoire équipé d'un maillage cellulaire tel que le réseau GSM, constitué par une pluralité de relais d'émission-réception.

Chaque relais est personnalisé pour échanger avec le radiotéléphone, au début de la connexion, un protocole d'échange comportant des signaux de services propres à identifier le pays dans lequel se trouve le maillon (4) ainsi que l'identification du relais considéré.

Dans le cas d'un réseau GSM, le protocole comporte une séquence de signaux désignée par "Mobile Coutry Code (MCC)" et une séquence de signaux désignée par "Mobile Network Code (MNC)".

La figure 2 représente le schéma de principe d'un ensemble embarqué selon l'invention.

Il est constitué par un micro-émetteur (5) dont la fréquence d'émission correspond dans l'exemple décrit aux fréquences du réseau de radiotéléphonie.

Le micro-émetteur est au repos déconnecté de l'alimentation (6), par exemple la batterie du véhicule ou une batterie autonome.

Un dispositif de veille comportant un circuit de commande électronique (7), alimente le micro-émetteur (6) lorsque le récepteur (8) détecte un signal d'activation.

Le signal d'activation peut être constitué par la détection d'un appel téléphonique par un récepteur de radiotéléphonie dédié au système antivol, ou par un signal codé, le récepteur comportant dans ce cas une mémoire vive pour l'enregistrement du code d'activation et un comparateur pour activer l'alimentation du micro-émetteur en cas de conformité entre le code reçu et le code mémorisé.

Le micro-émetteur (5) et le récepteur (8) sont reliés à une antenne commune (13) par l'intermédiaire d'un coupleur (12).

Le récepteur est relié à un calculateur (9) et à une mémoire vive (10) permettant d'analyser le signal reçu, de détecter les séquences du protocole de connexion contenant les informations relatives au maillon du réseau proximal, et à enregistrer ces informations.

Lorsque le récepteur (8) détecte un signal d'activation, il déclenche par le biais du calculateur (9) la composition la mise en fonction du micro-émetteur (5), et l'émission d'une séquence de signaux propres à assurer la connexion au réseau de radiotéléphonie, suivi d'une série de signaux propres à identifier le véhicule et une série de signaux préalablement mémorisés, propres à identifier le maillon proximal du réseau cellulaire.

Une horloge (11) réactive ensuite périodiquement la connexion au réseau de radiotéléphonie, la mémorisation des informations relatives au réseau proximal et l'émission d'un nouveau message.

La station de réception reçoit ces messages et les traite pour localiser le véhicule. Afin de réduire l'incertitude sur la position, la station de réception compare les informations reçues avec la cartographie du réseau cellulaire d'une part, et la cartographie routière et les informations horaires d'autre part, pour déterminer l'itinéraire et la position la plus probable du véhicule, et atteindre ainsi un degré de précision supérieur à la définition du réseau cellulaire.

Selon une variante, le véhicule comporte un ou plusieurs capteurs déclenchant l'activation du micro-émetteur. Ce mode de réalisation permet de garantir une autosurveillance du véhicule.

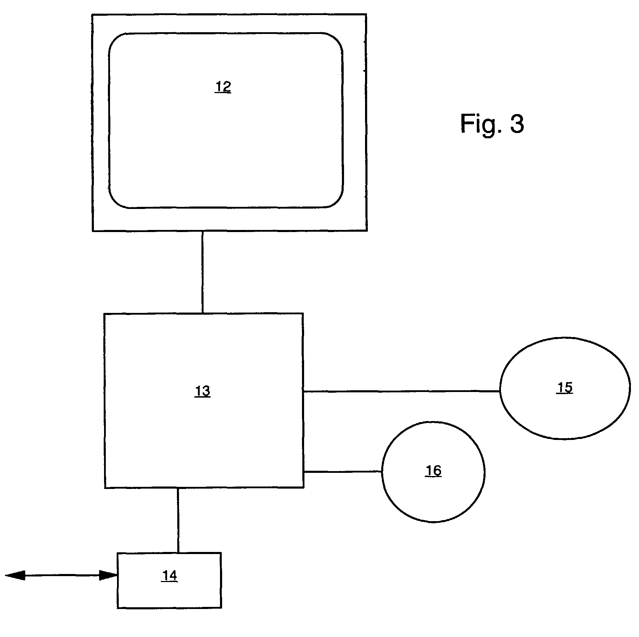

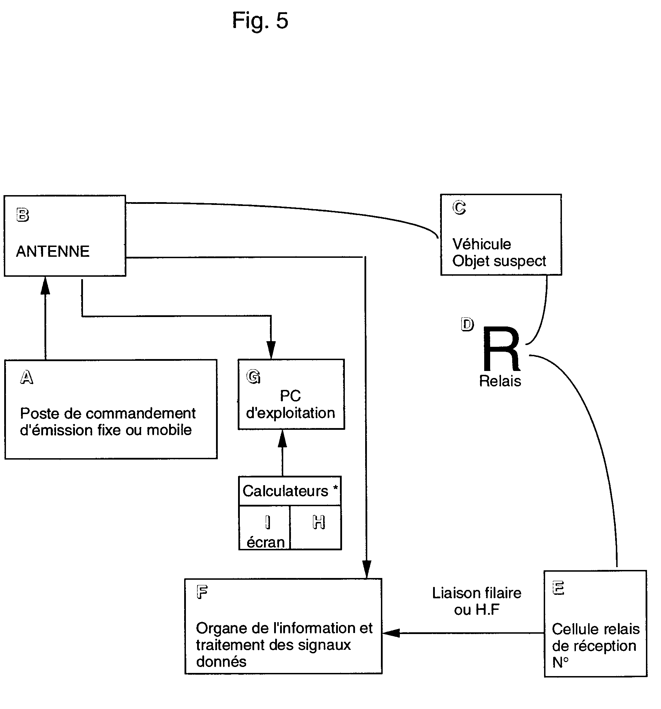

La station fixe comporte comme représenté en figure 3 un écran de visualisation (12) et un micro-ordinateur (13). Le micro-ordinateur (13) est équipé d'une carte de communication (14) permettant la liaison avec le réseau de radiotéléphonie et l'échange de données avec l'ensemble embarqué par l'intermédiaire de ce réseau.

Les données provenant des ensembles embarqués sont stockés dans une mémoire (15). Un autre ensemble de mémoires (16), par exemple un CD-ROM ou une mémoire de masse, contient des informations relatives à la cartographie routière et sur l'implantation des relais du réseau de radiotéléphonie.

Pour localiser un véhicule, le micro-ordinateur compose le numéro d'appel de l'ensemble embarqué dans le véhicule à localiser.

Cet appel active l'ensemble embarqué qui envoie en retour des informations à la station fixe. Ces informations comportent notamment l'identification du relais proximal.

L' ensemble embarqué envoie ensuite périodiquement, soit en fonction d'une périodicité imposée par l'horloge interne, soit en fonction d'interrogations périodiques par la station fixe, des informations permettant de déterminer une séquence de signaux constitués l'identité du relais proximal et l'heure de la mémorisation de ladite identité du relais proximal.

Cette séquence de données est comparée avec les informations provenant de la mémoire cartographique (16) pour déterminer un trajet et une position probable du véhicule. Cette comparaison avec les données cartographiques permet de réduire sensiblement l'incertitude sur la position. La précision de la position probable est sensiblement supérieure à la définition du réseau de radiotéléphonie, qui est fonction de la densité des relais.

La périodicité des interrogations du matériel embarqué par la station fixe peut être régulière, ou au contraire variable. Afin d'éviter réduire les possibilités de repérage de l'existence d'un matériel embarqué, les interrogations peuvent être séquencées de manière aléatoire.

La description qui suit se rapporte à un exemple de mise en oeuvre de l'invention.

La première étape est la phase d'apprentissage et d'acquisition des signaux R.F. Types (A.N)

La bande de fréquence couverte comprend la bande 400 - 1800 MHZ (utilisation principale 900MHZ).

Une large gamme d'appareils de mesure et de simulation originaux des signaux existe chez différents fournisseurs d'équipement de banc de mesure et test

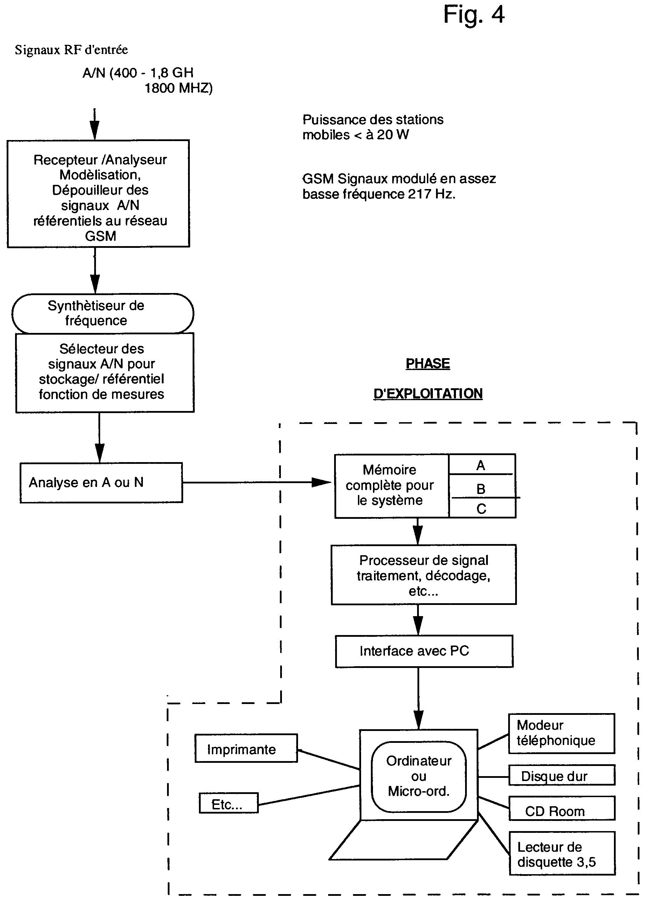

La figure 4 représente la phase d'apprentissage des signaux d'une part et, la phase d'exploitation d'autre part, dans une configuration de base du concept des circuits spécifiques dédiés à un ensemble ou à une tâche précises qui seront adjoints au dispositif de base représenté.

En "modélisant" certaines opérations mathématiques et logiques, issues de cet apprentissage et d'acquisition de paramètres significatifs, le système de traitement permettra de réduire substantiellement la quantité et la durée des traitements associés au système d'analyse des signaux comme par exemple : une moyenne des puissances, la portée des émetteurs, leur puissances, échelles.

La deuxième étape concerne l'analyse des signaux pour la configuration du système, à partir du signal R.F. appliqué à l'entrée du système d'analyse de localisation.

Le signal H.F. mesuré est notamment fonction :

- de la puissance de l'émetteur,
- de la distance entre E et l'Antenne
- des conditions géographiques de réception,
- du gain de l'antenne.

Le système d'analyse calcul simultanément un grand nombre de paramètres différents ou complémentaires, par rapport aux circuits spécifiques déjà implantés, et exécute une surveillance des limites entre signaux normaux (calibrer) par rapport à ceux reçus à l'aide de jeux de seuils indépendants pour chaque paramètre. Ce concept devrait permettre d'obtenir les deux modes de localisation.

Procédure Automatique Globale sur l'ensemble de l'Europe, ou même du monde s'il existe une couverture GSM. L'apparition sur écran de la couverture Européenne ou Mondiale peut, au choix de l'exploitant, faire apparaître la fonction zoom et échelle ne venant en rien modifier la situation géographique du relais sollicité dans le pays où se situe le mobile recherché.

Dans cette forme de localisation globale, tous les paramètres validés l'ont été au préalable par la connaissance du réseau GSM et à partir du signal H.F. reçu à l'instant de la localisation par l'opérateur.

Le mode local, lui, détermine sur un référentiel le relais en amont et en aval probable du mobile à localiser, ceci par rapport à son relais de commutation lors de l'appel de localisation. D'autres paramètres géographiques venant compléter des informations restées légères en cas d'immobilisation dans une zone devenue incertaine par le système. Ces paramètres sont classés et répertoriés sur la cartographie. Ce sont en règle générale des bâtiments, monuments historiques, églises... qui serviront de base relais pour la localisation.

Un micro contrôleur gère l'électronique des signaux R.F. et permet la communication avec un ordinateur Via Un Port série RS 232.

Initialisation de l'application de localisation peut être "géré" par le micro contrôleur.

Enfin les traitements et calculs, transférés sur l'écran du micro ordinateur pour une exploitation terrain, peuvent être réalisés avec ce micro contrôleur qui peut être un processeur de signal (Genre Motorola 56002). Un ensemble de logiciels de développement est fourni sous différents environnements dont windows grâce auquel le manipulateur du système selon l'invention télecharge l'application de localisation dans une mémoire programme par exemple.

L'information du relais sollicité peut nous être fourni par le Micro/Récepteur embarqué directement par simple traduction d'un nombre décimal en nombre binaire.

La partie commune à tous système d'analyse de localisation : la connaissance des émetteurs lieu /N° :

ex : le relais 157 a été sollicité lors d'une demande de localisation d'un engin de travaux publics volé à Paris. Demandeur identifié, société X, le relais 157 est attribué à la région Lyonnaise. Sa traduction au système d'analyse se fera par la codification binaire suivante : 157 = 10011101.

L'extraction et l'interprétation de l'information (relais n°) concerne essentiellement le traitement dit de bas niveau, visant à effectuer une analyse et une mise en forme des signaux qui doivent permettre d'améliorer leur contenu et par la même de faciliter l'étape d'interprétation. On trouve en premier lieu les traitements effectués au cours des phases de saisies (conversion analogique-numérique, isolation de certaines bandes de fréquences, lieu géographique).

Ici l'accès à une information utile, via une observation (sur écran) et un traitement numérique, transite par une acquisition de mesures délivrées par un ou plusieurs capteurs, ici l'antenne du micro E/R.

La phase d'acquisition comporte donc l'acquisition de ces signaux analogiques en signaux numérisés, c'est à dire échantillonnés dans le temps et quantifiés en amplitude.

D'une manière générale pour l'analogique et le numérique les approches utilisées pour bâtir le concept de localisation reposent sur l'analyse temps fréquence et la détection de rupture de modèle associée à une modélisation paramétrique, elle même effectuée avec une moyenne d'autres paramètres du modèle mobile à localiser.

Le diagnostic d'identification du mobile est soutenu par des techniques de classification qui relèvent de l'analyse de données, combinés à une représentation paramétrique des signaux. Là encore la solution consistera à rendre les traitements les plus automatiques et les plus intelligents possibles en utilisant des techniques de fusion de paramètres, en faisant coopérer les méthodes entre elles ou encore en utilisant des outils d'intelligence artificielle, notamment les systèmes dits experts; correspondant à des systèmes d'apprentissage, classification, reconnaissance et interprétation en autres.

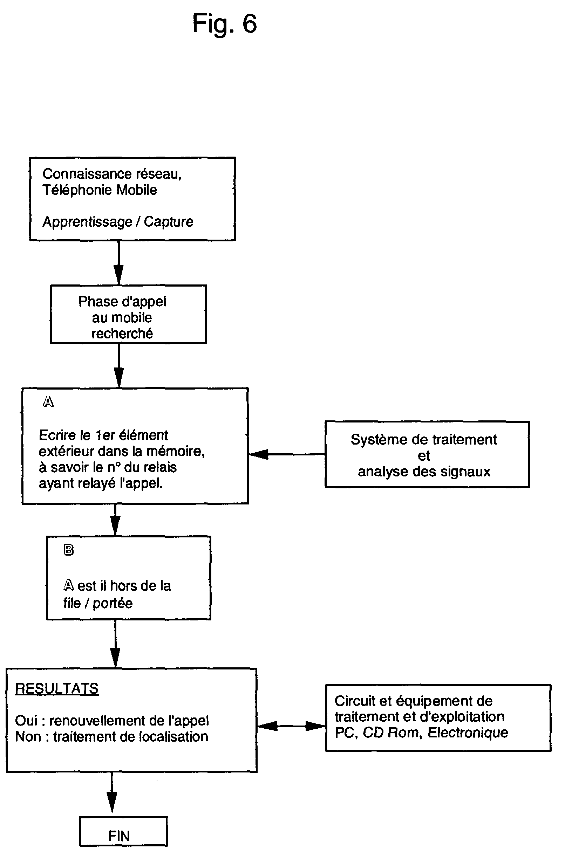

La notion de repérage est décrite en référence au schéma constituant la figure 6.

Dès réception du signal de localisation (identification) du mobile sollicité, une horloge assure à l'instant "T" de la liaison un décompte. Pour référentiel en dehors de l'échelle d'autres facteurs sont utilisés pour définir l'environnement géographique avec une précision acceptable pour le système :

- l'utilisation des points cardinaux Nord, Sud, Est, Ouest,
- la longitude O° en référentiel puis de 5° en 5° ou 10° en 10° (axe des ordonnées),
- la latitude O° en référentiel puis de 5° en 5° ou 10° en 10° (axe des abscisses),
- une origine, le relais sollicité avec ses coordonnées en X,Y.

La dérive dans le temps ne permet pas de calculer les distances exactes. C'est pour cela que l'on fera intervenir d'autres paramètres cités ci-dessus, on délimitera ainsi une zone au sein de laquelle le mobile se situera à coup sûr (en arrêt). En mode mobile les coordonnées très précises, connues par le système des infrastructures de téléphonie GSM, permettent une précision. En charge ensuite pour le calculateur du récepteur de corriger, à l'aide d'un circuit de correction, et d'atteindre des délais rapides de données de positionnaires et précises du Mobile sollicité.

Au dessus de 100 Mhz, les ondes se propagent plus difficilement à travers les obstacles. Plus la fréquence d'une onde radio est élevée et moins elle se propage, sa portée est limitée, elle s'atténue rapidement. D'autres facteurs rentreront en ligne de compte pour la connaissance de la puissance reçue : *la topologie*, hauteur de l'émetteur et du récepteur au niveau du sol. Voilà pourquoi des modèles analysent la relation entre la puissance du signal reçu et celle émise pour en faire une table de correspondance stockable dans une mémoire du système d'analyse.

La description qui suit concerne le repérage d'un point du plan par ses coordonnées (couples de nombres et à utiliser).

Par contre le repérage dans le plan par cases est insuffisant pour situer un point de façon sûre.

Qu'ils soient analogiques ou numériques, tous les réseaux de téléphonie mobile utilisent la technologie cellulaire. S'il existe quelques variantes, les principes de bases restent identiques quelle que soit la norme utilisée : radiocom 2000, GSM, DES 1800.

En effet, toute transmission de signaux dans des systèmes physiques, pour nous l'espace hertzien, est analogique car obligatoirement définie à tout instant. C'est le traitement que l'on fait subir à l'information portée par le signal qui peut être ou analogique ou numérique.

L'unité de trafic est une valeur absolue comprise entre 0 et 1 et exprimée en ERLANG. Un Erlang correspond à l'occupation d'une ligne à 100% pendant 1 heure (cela peut être le cas pour des services d'investigation mais pas souhaiter évidement).

On caractérise le trafic sur un lieu par le nombre moyen de communications et leur durée moyenne en transmission de données.

L'intensité du trafic "E" est égale à :

$$E = \frac{NT}{3600S}$$

avec

N : nombre de transactions effectuées.
T : le temps en secondes que dure chacune d'elle.

Ce calcul est effectué à l'heure chargée, correspondant aux moments où le trafic est maximum (c'est à dire aux heures de pointes).

E : indique donc le taux d'occupation de la ligne, ou du distributeur, avec les échanges de données avec le centrale.

$$\frac{NxL}{TxD}$$

Avec

L = longueur en nombre de caractères
D = débit nominal / seconde.

La méthode de triangulation de Gauss a pour but d'indiquer pour la vérification, basées sur la linéarité, la mise sous forme standard d'opérations qui se répètent.

Opportunité de construire une "table" de navigation routière (choix de l'échelle, fixation des caractéristiques).

De par le principe général de la triangulation les système basés sur cette triangulation (géométrique) rencontre deux limitations :

- la difficulté de procéder à l'installation d'équipement de mesures sur les véhicules pour l'application du système selon l'invention en tout cas.
- la durée excessive des temps de calcul, ainsi que les moyens de calcul trop importants nécessaires à l'extraction des coordonnées (x, y, z) des points mesurés (Mobile recherché).

Ces deux principales limitations sont évitées par un mode de triangulation parallèle qui consiste à remplacer les mesures directement par l'information du réseau de téléphonie mobile. Celle ci étant beaucoup plus aisées à connaître puisqu'elle existe au niveau de l'opérateur, ainsi que l'utilisation d'un référentiel axe longitudinal calibré et espacé en degré pour couvrir l'ensemble des pays sollicités par le système selon l'invention.

Cette combinaison associée à d'autres paramètres, déjà développés précédemment, permet de réduire considérablement les calculs en évitant le calcul des coordonnées x et y fournies par le réseau par capture et modélisation du signal H.F. Ces coordonnées sont le relais de base d'appel du Mobile recherchés, l'axe de référentiel, la détermination des relais probable de passage en amont et en aval ; ces coordonnées sont donc acquises globalement.

Seul subsiste le calcul par interpolation dans une matrice plus ou moins complexe de calibration, des coordonnées (Z) du mobile recherché en déplacement et suivant la direction (d) du mobile recherché sachant que la notion de vecteurs multidimensionnels (matrices) peut être facilement appliquée pour ce type de données (le calcul lors de la mise en oeuvre du concept est long).

L'objet à identifier étant situé à l'intérieur d'une cellule (champ électrique mesurable), la cellule se comportant comme un émetteur / récepteur identifiable par le réseau, par comparaison des signaux et autres caractéristiques acquis et stockés en émission sur celui restitué (signal) en réception. Ces paramètres d'acquisition et de stockage sont reliés au module électronique de mise en forme et de traitement du signal + circuit de tolérances, correcteurs, seuils... qui transmet les données ainsi acquises au logiciel de calcul ou progiciel calculateur dédié à l'analyse de fonctions scientifiques, mathématiques, trigonométriques, traitement du signal, statistiques... qui va reprendre les données acquises notamment en phase d'apprentissage (traitement et information stocké sur mémoire) pour la détermination du mobile recherché avec une précision théorique de 100 à 150 mètres.

Cette précision pourra être réduite par mesure associée à une horloge ainsi qu'une échelle modulaire qui permettront de mesurer à l'instant "T" le franchissement d'une zone relais sur une autre, en fonction du signal de limite de portée, avant transfert sur un autre relais répertorié. Ces mesures permettent de déterminer la vitesse moyenne approximative du mobile et sa traduction en représentation sur une carte.

Le système peut permettre l'enregistrement de x relais sollicités sur son passage dans le cadre d'application de haute sécurité Police, gendarmerie etc.

La séquence de l'acquisition et du traitement des signaux issus des relais et réalisée de la manière suivante par l'électronique du système selon l'invention :

analyse du signal d'appel (normalement à puissance constante) ; l'électronique réalise alors simultanément les opérations de détermination des relais amont et aval sur une trajectoire probable du mobile (ces informations réseaux sont connues par le système en phase d'acquisition et d'apprentissage stocké dans une mémoire de valeur du signal et autres valeurs).

Le stockage Analogique ou Numérique de la conversion du signal, ainsi que leur compression ou leur transcription sur un nombre x de bits, n'est pas un problème. Si le signal issu des réseaux (relais) est Analogique le procédé consiste à filtrer puis à binariser le signal, et à l'aide d'une logique spécialisée de type décomposition spectrale d'un créneau rectangulaire constitué uniquement de fréquences impaires (avant échantillonnage). La reconstitution de ce créneau consiste en la superposition des sinusoïdes ; l'approximation sera d'autant meilleur que le nombre de sinusoïdes sera élevé. Déduction d'un modèle (référence du signal analogique), puis stockage de cette information dans une mémoire.

Dans le même temps, l'électronique restitue à l'aide d'un simple, mais performant, convertisseur Numérique / Analogique ou Analogie / Numérique à x bits 12-16 associé à un filtrage. Le signal découpé ainsi restitué correspond au franchissement d'une zone relais. Pour chaque cellule un seuil est définie grâce à la connaissance préalable du niveau maximal du signal ; après traitement de ces données par le calculateur ce dernier effectue le calcul des coordonnées (Z) du mobile recherché.

Les différentes séquences du calcul de base de (Z) sont les suivantes :

- instant "T" de franchissement ou de maintient sur un relais, cellule.
- le calcul consiste à être transposé à partir de matrices de calibration.

La tâche de l'algorithme de calcul consiste à rechercher pour chaque cellule, ceci dans la table de calibration correspondante, la prise de la valeur supérieure et de calculer par interpolation linéaire une valeur entre ces 2 points; l'ensemble des calculs étant réalisés pendant un temps assez court (appel / réponse). Le dispositif acquière donc en temps réel : le point (Z), donc le mobile à localiser situé sur un itinéraire quelconque sur un maillage orthonormé, la performance du calculateur associé à un circuit logique correcteur (principe appliqué à ce circuit, théories des systèmes linéaires). Le principe de base d'un tel circuit consiste à modéliser le circuit intégré numérique avec un nombre d'équations différentielles égale à celui des variables d'état, et au choix des calcules en simples ou doubles; la précision doit permettre une localisation d'un mobile meilleur que 150 mètres en campagne et 50 mètres en ville (calcul simple ou double, précision en fonction de la puissance spectrale, temps amplitude du signal ...)

En outre le système doit permettre le calcul ou la connaissance de la perte ou de l'atténuation du signal :

- sur antenne cassée pour les modules de puissance de 2 à 8 watts,

- sur coupure coaxiale pour les modules de puissance de 2 et 8 watts,
- le signal de limite de portée par rapport au émetteurs.

La certitude logique est une notion du domaine spéculatif or le calcul est une action. Dans un tel domaine il faut se contenter d'une certitude pratique. Dans la configuration du système selon l'invention, notamment liée au phénomène de transmission hertzienne, et dans la configuration d'informations théorique des infrastructures de téléphonie mobile GSM.

L'établissement d'un plan de calcul que j'ai suivi a été l'exécution d'un calcul préliminaire grossier destiné uniquement à obtenir les informations les plus nécessaires au concept selon l'invention.

La décision arbitraire sérieusement motivée par le besoin de l'ordre de grandeur d'une quantité intermédiaire transformée en signification physique ; l'information obtenue de cette manière est relative aux grandeurs exactes, mais on la transfère au grandeurs approchées. Il en résulte que tous calcul faisant intervenir des grandeurs conduits à une petite tâche d'indétermination - le même phénomène se produit si les données d'un calcul sont affectées d'une incertitude.

L'algorithme sommaire, en mode opératoire global est représenté en figure 5.

Modélisation de certaines opérations mathématiques, enregistrement de constantes etc

- vitesse de propagation de signaux,
- structure de linéarité,
- calcul d'interpolation linéaire,
- espaces vectoriels (matrice),
- cinématique (trajectoires),
- mesure angulaire / trigonométrie, opérations classiques,
- précision de données d'entrée pour fiabiliser les données de résultat,
- fonction holomorphe (vitesse),
- échelles,
- distances entre 2 villes, points, mesure des longueurs,
- mobile de même sens.

L'utilisation des antennes pour le concept sera à gain O et B - 1/4 d'onde

Les antennes à gain d'ordre de 3 et B peuvent en ville perturber le réseau, risque de capture de plusieurs relais.

GSM bande décimétrique 300 à 1000 MHZ.

Antenne : incorporée dans les joints du véhicule, ou incorporée en parallèle du système de dégivrage de la vitre arrière.

La plupart des valeurs numériques utilisées dans les calculs scientifiques sont des valeurs approchées, mais on estime que l'erreur qui en résulte n'est pas préjudiciable : il est bien évident par exemple que la valeur approchée π = 3,1 est amplement assez précise pour placer le point π sur un papier graphique millimètre (donc sur un écran). La théorie de l'approximation a pour but la recherche de "bonnes valeurs approchées". Celles-ci doivent être plus appréciées pour la configuration du système dans le concept selon l'invention, notamment dans le mode de localisation global (ensemble des pays) sans toutefois créer des perturbations dans la logique même du mode opératoire concernant les paramètres, valeurs en jeu dans le concept.

L'utilisation de circuits intègres les plus récents seront utilisée dans le concept électronique d'analyse et de traitement des signaux du concept selon l'invention. Notamment en vue d'augmenter l'autonomie, la fiabilité du système, la miniaturisation, l'évolution technologique dans l'évolution des composants (microprocesseurs, copossesseur, circuits intègres, filtre, composants classiques...), dédié à l'électronique et appliqué au télécom étant en perpétuel mouvement.

Les circuits qui suivent ne sont donnés qu'à titre purement indicatif ; il peuvent être utilisés ou remplacés par des nouvelles versions plus rapides ou avec des capacités mémoires ou exécutives plus ciblées pour le concept selon l'invention.

- Calculateur MSE : destiné à l'analyse et l'identification des signaux - Télémesures.

    Les composants circuits comportent :

- Circuits autocorrecteurs (technologie de détection et de correction d'erreurs des circuits numériques) ;
- Module de calcul et d'acquisition (processeur 68020 et coprocesseur 68882)
- Circuits bipolaires linéaires ou analogiques. Il existe différents modèles, ce sont des circuits intègres qui amplifient ou traitent le signal reçu sans le modifié profondément. Le signal d'entré est analogue à celui d'entrée et inversement.
- Circuit intégré diviseur :

    type SN 7490 diviseur par 2,5 / 10 rapport cyclique 1 / 1
    type SN 7492 diviseur 6 et 12
    type SN 7493 diviseur 2,4 et 8,16

- Technologie de câblage des circuits CMOS utilisé : Transitions faibles, bruits...
- Transistors.
- Amplificateur module E / R
- Composant IMP 50 E 10, 11 circuits, de la société IMP.

    Le système E / R reste compatible avec la nouvelle numérotation éventuelle lorsqu'elle émettra 10 chiffres.
    Le système pourra permettre l'appel, à la société gestionnaire et / ou à son propriétaire, d'un signal modulé d'alerte comme un SOS avec trois bips long, trois bips courts puis trois bips longs. Relais électromécanique miniature interface entre 2 systèmes. Enregistrement sur la carte SIM.

L'identification du mobile se fait aisément par son Nº .

Cette possibilité sera prise en compte lors du concept selon l'invention. Une solution particulière concerne l'enregistrement sur la puce de 3 appels identiques chez le propriétaire du véhicule avant que le 4ème ne soit chez l'opérateur du système selon l'invention.

Les différentes "missions" du circuit Asic sont assurées par un système multiprocesseur de technologie ultramoderne dernier né ou à créer, qui exécute l'ensemble du traitement et du protocole d'analyse du signal en A / N.

D'autres circuits périphériques sont dédiés à la capture des signaux A / N par rapport à un référentiel, et qui se charge de la commande de toutes les interfaces du système.

Les principales caractéristiques en sont :

- convertisseurs A / N à résolution de 10 / 12 bits et fréquence d'échantillonnage.
- transputer pour l'acquisition des données de mesure,
- processeur de signal rapide,
- liaison avec PC système d'exploitations temps réel,
- association avec interface PC / disque dur, CD rom, lecteur de disquettes 3,5 etc.

    Le matériel de la station fixe est constitué par;

- un modem,
- un ordinateur
- un support de cartographie:

    Tous les types de cartes électroniques existants, aussi bien les cartes vectorielles dessinées à la main que les cartes "Rasters" obtenues par numérisation de la carte papier IGN, Michelin (marques commerciales)...
    L'émission est constituée de trains d'impulsion H.F.

* Calculateurs : Le traitement se fait directement par rapport aux données en ⊠ mémorisé et au nouvelles données afficher sur écran Ⅰ

    La localisation visuelle et/ou sonore de l'objet suspecté (lieu, direction : distance par rapport au relais de passage et principalement avec le niveau du signal reçu par rapport à celui émis.

    Explication : Lecture interprétation du synoptique du procédé de localisation.

- on appelle le véhicule à localiser (trajet allé du signal),
- le signal électrique arrive par le récepteur (micro-émetteur) au véhicule prélocalisé Ⓒ qui prend ou simule la prise de ligne. Cette action engage l'émission sur un relais par rapport à des cellules de passage arrivant par l'intermédiaire de l'antenne Ⅾ qui transmet à un module d'identification du mobile en Ⓔ, en le filtrant par un organe de traitement des signaux et données Ⓕ qui renvoie sur l'antenne Ⓑ l'ensemble des informations recueillis.

L'ensemble de ces données arrive sur le terminal PC d'exploitation Ⓖ.

La station émettrice où se trouve l'émetteur Ⓐ envoie par l'intermédiaire de l'antenne Ⓑ un signal électrique d'une durée modulable selon les utilisations et souhaits des utilisateurs :

- de courte durée pour localiser un objet
- de plus ou moins longue durée pour des services de sûreté.

L'opération peut être renouvelée à volonté.

L'invention est décrite dans ce qui précède à titre d'exemple non limitatif. Il est bien entendu que l'Homme de métier sera à même de réaliser différentes variantes de réalisation et de mise en oeuvre sans pour autant sortir du cadre de l'invention.

**Revendications**

1. Procédé pour la localisation de véhicules, notamment de véhicules volés, du type consistant à équiper le véhicule avec un ensemble micro-émetteur-récepteur embarqué, le micro-émetteur (5) étant activable par un récepteur (8) détectant l'émission d'un signal radioélectrique spécifique, caractérisé en ce que le signal radioélectrique est émis par l'intermédiaire d'un réseau cellulaire de radiotéléphonie tel que le GSM, et en ce que le micro-émetteur (5) émette après activation sur ledit réseau cellulaire un signal comportant une séquence d'identification du véhicule et une séquence propre à identifier le maillon proximal du réseau cellulaire.

2. Procédé pour la localisation de véhicules, notamment de véhicules volés, selon la revendication 1 caractérisé en ce que la détection du signal d'activation déclenche la mémorisation en permanence d'un couple de valeurs constitué par l'information propre à identifier le maillon proximal du réseau cellulaire et par l'heure de mémorisation.

3. Procédé pour la localisation de véhicules, notamment de véhicules volés, selon la revendication 1 ou 2 caractérisé en ce que la fréquence d'émission du micro-émetteur (5) embarqué corresponde aux fréquences standards du réseau de radiotéléphonie.

4. Procédé pour la localisation de véhicules, notamment de véhicules volés, selon la revendication 1 ou 2 caractérisé en ce que la fréquence d'émission du micro-émetteur (5) embarqué est une fréquence spécifique à un dispositif de détection.

5. Procédé pour la localisation de véhicules, notamment de véhicules volés, selon la revendication 1 caractérisé en ce qu'un micro-ordinateur compose le numéro d'appel de l'ensemble embarqué dans le véhicule à localiser, cet appel activant l'ensemble embarqué qui envoie en retour des informations comportant notamment l'identification du relais proximal à la station fixe, l'ensemble embarqué envoyant ensuite périodiquement, soit en fonction d'une périodicité imposée par l'horloge interne, soit en fonction d'interrogations périodiques par la station fixe, des informations permettant de déterminer une séquence de signaux constitués l'identité de du relais proximal et l'heure de la mémorisation de ladite identité du relais proximal, ces données étant comparée avec les informations provenant de la mémoire cartographique (16) pour déterminer un trajet et une position probable du véhicule.

6. Dispositif embarqué pour la localisation de véhicules, notamment de véhicules volés, du type comportant un ensemble micro-émetteur-récepteur (8) embarqué, caractérisé en ce qu'il comporte en outre des moyens de mémoire pour mémoriser les informations d'identification du maillon du réseau cellulaire de radiotéléphonie, et des moyens pour provoquer l'émission d'un signal comportant une séquence propre à identifier le véhicule et une séquence correspondant au maillon cellulaire proximal en réponse à la réception d'un signal d'activation.

7. Dispositif embarqué pour la localisation de véhicules, notamment de véhicules volés, selon la revendication 6 caractérisé en ce qu'il comporte en outre un circuit d'horloge propre à déclencher périodiquement la mémorisation d'un couple de valeurs constitué par l'heure et l'information d'identification du maillon du réseau cellulaire de radiotéléphonie.

8. Station fixe pour la mise en oeuvre du procédé selon l'une quelconque des revendications 1 à 5 caractérisé en ce qu'elle comporte un écran de visualisation (12) et un micro-ordinateur (13) équipé d'une carte de communication (14) permettant la liaison avec le réseau de radiotéléphonie et l'échange de données avec l'ensemble embarqué par l'intermédiaire de ce réseau, les données provenant des ensembles embarqués étant stockés dans une mémoire (15), un autre ensemble de mémoires (16), par exemple un CD-ROM ou une mémoire de masse, contenant des informations relatives à la cartographie routière et sur l'implantation des relais du réseau de radiotéléphonie.

Fig. 1

Fig. 2

Fig. 3

12

13

14

15

16

# Fig. 5

B
ANTENNE

C
Véhicule
Objet suspect

D
R
Relais

A
Poste de commandement
d'émission fixe ou mobile

G
PC
d'exploitation

Calculateurs *

I
écran

H

F
Organe de l'information et
traitement des signaux
donnés

Liaison filaire
ou H.F

E
Cellule relais
de réception
N°

# Fig. 4

Signaux RF d'entrée

A/N (400 - 1,8 GH
1800 MHZ)

Puissance des stations
mobiles < à 20 W

GSM Signaux modulé en assez
basse fréquence 217 Hz.

Recepteur /Analyseur
Modèlisation,
Dépouilleur des
signaux A/N
référentiels au réseau
GSM

Synthètiseur de
fréquence

Sélecteur des
signaux A/N pour
stockage/ référentiel
fonction de mesures

**PHASE**

**D'EXPLOITATION**

Analyse en A ou N

| Mémoire complète pour le système | A |
| | B |
| | C |

Processeur de signal
traitement, décodage,
etc...

Interface avec PC

Imprimante

Etc...

Ordinateur
ou
Micro-ord.

Modeur
téléphonique

Disque dur

CD Room

Lecteur de
disquette 3,5

# Fig. 6

```
┌─────────────────────────────┐
│ Connaissance réseau,        │
│ Téléphonie Mobile           │
│                             │
│ Apprentissage / Capture     │
└─────────────────────────────┘
              │
              ▼
     ┌──────────────────┐
     │  Phase d'appel   │
     │   au mobile      │
     │   recherché      │
     └──────────────────┘
              │
              ▼
┌─────────────────────────────┐              ┌──────────────────────────┐
│ Ⓐ                          │              │ Système de traitement    │
│                             │              │          et              │
│ Ecrire le 1er élément      │◄─────────────│ analyse des signaux      │
│ extérieur dans la mémoire,  │              └──────────────────────────┘
│ à savoir le n° du relais   │
│ ayant relayé l'appel.       │
└─────────────────────────────┘
              │
              ▼
     ┌──────────────────┐
     │ Ⓑ               │
     │                  │
     │ Ⓐ est il hors de la │
     │ file / portée    │
     └──────────────────┘
              │
              ▼
┌─────────────────────────────┐              ┌──────────────────────────┐
│ RESULTATS                   │              │ Circuit et équipement de │
│                             │◄────────────►│ traitement et d'exploitation │
│ Oui : renouvellement de l'appel │          │ PC, CD Rom, Electronique │
│ Non : traitement de localisation │         └──────────────────────────┘
└─────────────────────────────┘
              │
              ▼
        ┌──────────┐
        │   FIN    │
        └──────────┘
```

## Office européen des brevets

# RAPPORT DE RECHERCHE EUROPEENNE

Numero de la demande

EP 95 40 2938

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>Y | GB-A-2 218 835 (TRACKMOBILE INC)<br>* page 4, ligne 24 - page 8, ligne 5 *<br>* page 9, ligne 12 - page 22, ligne 6 *<br>* page 24, ligne 11 - page 27, ligne 25;<br>figures 1-7 *<br>--- | 1-3,5-8<br>4 | B60R25/10 |
| Y | DE-U-92 16 097 (ALIPOUR)<br>* le document en entier *<br>--- | 4 | |
| X | DE-C-42 43 415 (DETECON)<br>* le document en entier *<br>--- | 1,3,6-8 | |
| X | EP-A-0 417 944 (NOKIA MOBILE PHONES)<br>* le document en entier *<br>--- | 1-3,5-8 | |
| X | EP-A-0 242 099 (ADVANCED STRATEGICS)<br>* page 2, ligne 42 - page 3, ligne 10 *<br>* page 3, ligne 10 - page 4, ligne 39 *<br>* page 5, ligne 4 - ligne 35 *<br>* page 6, ligne 18 - page 7, ligne 28;<br>figures 1-9 *<br>--- | 1,4-8 | |
| | | | **DOMAINES TECHNIQUES RECHERCHES (Int.Cl.6)** |
| A | GB-A-2 270 405 (BARRON ET AL.)<br>* le document en entier *<br>----- | 1-8 | B60R |

Le présent rapport a été établi pour toutes les revendications

| Lieu de la recherche | Date d'achèvement de la recherche | Examinateur |
|---|---|---|
| LA HAYE | 24 Mai 1996 | Geyer, J-L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)